# EUROPÄISCHE PATENTSCHRIFT

(11) **EP 3 057 769 B1**
(45) Veröffentlichungstag und Bekanntmachung des Hinweises auf die Patenterteilung: **26.04.2017**
(21) Anmeldenummer: 14776578.8
(22) Anmeldetag: 18.09.2014
(51) Int. Cl.: B29C 55/20

(54) **KLUPPEN-TRANSPORTEINHEIT**
CLIP TRANSPORTING UNIT
UNITÉ DE TRANSPORT À PINCES

(30) Priorität: 14.10.2013 DE 102013017011
(43) Veröffentlichungstag der Anmeldung: 24.08.2016
(73) Patentinhaber: Brückner Maschinenbau GmbH & Co. KG, 83313 Siegsdorf (DE)
(72) Erfinder: GUMPINGER, Helmut, 83454 Anger (DE); EISELMAYER, Wolfgang, A-5760 Saalfelden (AT); JAUERNIG, Rudolf, 83373 Taching (DE)
(74) Vertreter: Flach, Dieter Rolf Paul
(86) Internationale Anmeldenummer: PCT/EP2014/002534
(87) Internationale Veröffentlichungsnummer: WO 2015/055272

(56) Entgegenhaltungen:
- US-A- 5 051 225
- US-A- 5 797 172

## Beschreibung

Die Erfindung betrifft eine Kluppen-Transporteinheit nach dem Oberbegriff des Anspruches 1.

Reckanlagen finden insbesondere bei der Kunststofffolien-Herstellung Anwendung. Bekannt sind sogenannte Simultan-Reckanlagen, in welchen ein Kunststofffilm gleichzeitig in Quer- und Längsrichtung gereckt werden kann. Bekannt sind ebenso sequentielle Reckanlagen, bei denen ein Kunststofffilm in zwei aufeinander folgenden Stufen gereckt wird, beispielsweise zunächst in Längsrichtung und dann in Querrichtung (oder umgekehrt).

Die zu reckende Materialbahn, in der Regel also ein Kunststofffilm, wird mittels Kluppen erfasst, die auf beiden Seiten der zu reckenden Materialbahn auf umlaufendenden Führungsschienen verfahrbar angeordnet sind. Die Kluppen werden dabei nacheinander von einer Einlaufzone (in welcher der Rand beispielsweise einer zu reckenden Kunststofffolie erfasst wird) über eine Reckzone (in der die gegenüberliegenden Kluppen auf den Führungsschienenabschnitten mit einer Querkomponente divergierend zur Transportrichtung voneinander wegbewegt werden) zu einer Auslaufzone und dann auf einem Rückweg wieder zur Einlaufzone verfahren, wobei die Folie in der Auslaufzone beispielsweise einer gewissen Relaxation und/ oder Wärmenachbehandlung unterzogen werden kann.

Vom Grundsatz her umfasst ein simultanes oder sequenzielles Transport- und/oder Recksystem eine teilweise oder ganz umlaufende Führungsschiene, längs der die Transportelemente mit den jeweiligen Kluppeneinheiten und den zugehörigen Antriebseinheiten verfahrbar geführt wird. Daneben kann auch noch eine separate zusätzliche Gewicht aufnehmende Tragschiene vorgesehen sein. Bei so genannten Pentagraphsystemen ist neben der Führungsschiene noch eine Steuerungsschiene vorgesehen.

Bei den Transporteinheiten, die wie ausgeführt die Kluppeneinheiten zum einen und die Antriebseinheiten zum anderen umfassen, sind die Antriebseinheiten entsprechend des verwendeten Systems unterschiedlich ausgestaltet. Bei Querreckanlagen zum Beispiel bestehen diese Antriebseinheiten aus Kettengliedern, an denen die Kluppeneinheiten befestigt oder an denen die Kluppeneinheiten entsprechend ausgebildet und mit den Ketteneinheiten mit verfahrbar angeordnet sind. Bei Pentagraphsystemen bestehen die Antriebseinheiten aus Scherenelementen. Bei Linearmotorsystemen sind für die Antriebseinheiten wiederum Sekundärteile vorgesehen, also in der Regel Permanentmagneten, die über stationäre Elektromagneten angetrieben werden. Die Führung und die Kraftaufnahme der Transporteinheiten, d.h. insbesondere der Antriebseinheiten auf der Führungsschiene bzw. der Führungs- und/ oder Transportschiene erfolgt in der Regel über Gleit- und/oder Rollenelemente oder über eine Kombination aus Gleit- und Rollenelementen.

Eine Breitreck-Anlage mit einer Rollenlagerung an einer Führungsschiene ist beispielsweise z.B. aus der EP 471 052 B1 bekannt geworden. Eine umlaufende Transportkette, die integraler Bestandteil des Transportsystems ist, wird hier über Kluppenwagen an der Führungsschiene verschiebbar geführt und abgestützt. Dazu sind an den beiden gegenüberliegenden Vertikalflächen der im Querschnitt rechteckförmigen Führungsschiene jeweils zwei um eine Vertikalachse rotierende Stütz- oder Führungsräder vorgesehen. Weitere Stützräder drehen um eine Horizontalachse und sind so angeordnet, dass das Gewicht der Transportkette und der Kluppen auf der oben liegenden, horizontal ausgerichteten Schmalseite der Führungsschiene abgestützt wird.

Grundsätzlich können die erwähnten Rollenlager aber auch durch Gleitlager ganz oder teilweise ersetzt werden, die dann beispielsweise auf der Führungseinrichtung (Führungsschiene) entlang bewegt werden. Ein derartiges System ist beispielsweise aus der US 5 797 172 A bekannt geworden. Gemäß dieser Vorveröffentlichung wird eine zu reckende Materialbahn, in der Regel also ein Kunststofffilm, mittels Kluppen erfasst, die an Ketten befestigt sind, und die auf beiden Seiten der zu reckenden Materialbahn auf umlaufenden Führungsbahnen verfahrbar angeordnet sind. Die Transporteinheiten umfassen also hier neben den Kluppenteilen wiederum Transportteile in Form von Ketten. Unterschiedlich zu dem zuvor genannten Stand der Technik ist jedoch, dass die Transporteinheiten sich über Gleitelemente an zwei gegenüberliegenden Seiten einer Führungsschiene zum einen und auf eine unterhalb der Führungsschiene vorgesehenen Tragschiene zum anderen ergänzend abstützt und hier gleitend verfahrbar geführt sind.

In den Vorveröffentlichungen WO 2004/071 748 A1, der US 3 148 409 wie der JP 2004-322266 A sind z.B. die bereits erwähnten Pentagraphsysteme als beschrieben, und zwar mit ihren jeweiligen Kluppenteilen, die direkt oder über eine Brücke mit der zugehörigen Transporteinheit verbunden sind, die längs der Führungsschiene verfahren werden. Die Steuerung der Reckkräfte in Maschinen- oder Abzugsrichtung werden letztlich über die Steuerschiene eingeleitet, deren Transporteinheiten analog zu den Einheiten auf der Führungsschiene aufgebaut sind, die dann aber keine Kluppeneinheiten aufweisen. Die Verbindung und Antriebseinleitung zwischen den Transporteinheiten auf der Steuer- und Führungsschiene erfolgt über die Scherenhebel des Pentagraphsystems.

Schließlich sind auch noch linearmotorbetriebene Systeme bekannt geworden, beispielsweise aus der WO 89/12543 A1 oder der DE 44 41 020 C1. Bei derartigen mittels Linearmotor angetriebenen Systemen ist das Kluppenteil über eine Brücke mit dem Antriebs- oder Transportteil verbunden. Die Einleitung der Antriebskraft erfolgt über entsprechend vorgesehene bzw. befestigte Sekundärteile, in der Regel über angeflanschte Permanentmagnete, die bei den so genannten aktiven Antriebseinheiten vorgesehen sind. Daneben gibt es auch so genannte leerlaufende Transporteinheiten (idler) ohne Sekundärteile, d.h. also nicht aktiv angetriebene Transporteinheiten ohne Sekundärteile, die konstruktiv analog zu den angetriebenen Transporteinheiten aufgebaut sind und durch die Filmkräfte mitbewegt werden.

Die Führung der Transportelemente kann auch bei diesem System an der Führungsschiene und/oder auf der Tragschiene über Gleiteinheiten, über Rolleneinheiten oder über eine Kombination von beiden erfolgen.

Bei all diesen erläuterten Systemen ist die Herstellung der Transporteinheiten sehr aufwendig. Die erläuterten Transport- und/oder Kluppenteile müssen nämlich in der Praxis durch Feinguss, Sandguss oder Kroningguss hergestellt werden. Bekanntermaßen sind derartige Fertigungsprozesse extrem zeitaufwendig. Als nachteilig erweist sich auch, dass Änderungen an der Konstruktion nur sehr langfristig durchführbar sind.

Vor allem aber bergen die bekannten Gießverfahren die Gefahr in sich, dass sich Lunker im Gussprozess bilden, die zu einem Versagen oder zu Bruch des Bauteils führen können. Auch von daher müssen entsprechende Gussteile in der Regel mit größeren Wandstärken gegossen werden, um dieser Gefahr zumindest teilweise entgegen zu wirken.

Erwähnt werden muss auch, dass die vergleichsweise komplizierte Geometrie an diesen Gussteilen auch dazu führt, dass sich die notwendige Nachbearbeitung grundsätzlich schwieriger gestaltet. Denn es müssen bei den entsprechenden Gussteilen enge Toleranzgrenzen eingehalten werden, um ein entsprechendes Hochgeschwindigkeits-und Dauerlastverhalten der Transporteinheiten zu gewährleisten.

Von daher ist es Aufgabe der Erfindung verbesserte Transporteinheiten, d.h. insbesondere verbesserte Transporteinheiten mit zugehörigen Kluppenteilen zu schaffen.

Die Aufgabe wird erfindungsgemäß entsprechend den im Anspruch 1 angegebenen Merkmalen gelöst. Vorteilhafte Ausgestaltungen der Erfindung sind in den Unteransprüchen angegeben.

Es ist mehr als überraschend, dass sich die erfindungsgemäßen Vorteile dadurch erzielen lassen, dass die Transporteinheiten grundsätzlich in ihrer wesentlichen Basis-Beschaffenheit aus Schmiedekörper bestehen, mit anderen Worten also durch Schmieden hergestellt sind. Einer der dadurch bedingten wesentlichen Vorteile ist, dass die durch Schmieden hergestellten Teile eine geringere Durchlaufzeit benötigen. Dadurch werden Liefer- und Entwicklungszeiten und die Materiallogistik gegenüber herkömmlichen Lösungen erheblich verbessert. Zudem wird durch Verwendung von Transporteinheiten und Kluppen in Form von Schmiedeteilen gewährleistet, dass Gusslunker vollständig ausgeschlossen sind. Dadurch werden die gesamten Einheiten deutlich sicherer. Es sind auch im Rahmen der Erfindung nicht mehr jene Maßnahmen grundsätzlich zur Erhöhung der Sicherheit erforderlich, wie beim Stand der Technik.

Zudem lässt sich durch die erfindungsgemäßen Schmiedeteile auch die Bauhöhe des gesamten Systems deutlich reduzieren.

Ferner lassen sich die erfindungsgemäßen Schmiedeteile, d.h. für die im Wesentlichen aus Schmiedeteile bestehenden Transport- und/oder Kluppenteile beispielsweise nicht nur in sequenziellen sondern auch in simultanen Reckanlagen verwenden und einsetzten.

Schließlich hat sich im Rahmen der Erfindung auch gezeigt, dass es ausreichend ist, wenn die durch Schmieden hergestellten Schmiederohlinge hinterschneidungsfrei gestaltet sind. Sie können dann so nachbearbeitet werden, dass sie eine Formgestaltung aufweisen, dass an ihnen beispielsweise die erwähnten verschwenkbaren Kluppenhebel eingehängt werden können, Dämpfer befestigt werden können, die in der Stoßdämpfung während des Einsatzes als Transporteinheiten dienen, etc..

Dabei ist es problemlos möglich die entsprechenden Schmiedeteile so hinterschneidungsfrei auszugestalten, dass sie grundsätzlich schimedegerechte Wandstärken aufweisen.

Obgleich Schmiedeteile nicht mit der gleichen Genauigkeit hergestellt werden können wie Gussteile, erweist sich dies jedoch in der Praxis nicht als Nachteil oder relevanter Nachteil. Schmiedeteile bedürfen ohnehin einer mechanischen Nachbearbeitung, was letztlich für das Endprodukt von Vorteil ist.

Dass letztlich die Verwendung von Transport- und/oder Kluppenteilen auf der Basis von Schmiedeteilen oder Schmiederohlingen dazu führt, dass die Teilung der Kluppen verglichen mit herkömmlichen Lösungen etwas größer wird, erweist sich in der Praxis ebenfalls nicht als relevanter Nachteil.

Die Erfindung wird nachfolgend anhand von Ausführungsbeispielen, teilweise auch im Vergleich zu herkömmlichen Lösungen, näher erläutert und beschrieben. Dabei zeigen im Einzelnen:
- Figur 1a:: eine schematische Draufsicht auf eine Reckanlage mit einer gemeinsamen Trägerstruktur für die Prozessseite und die Rücklaufseite innerhalb eines Ofens;
- Figur 1b:: eine zu Figur 1a abgewandelte Ausführungsform einer Reckanlage, bei welcher die Rücklaufseite für die Antriebseinheit zur Prozessseite getrennt außerhalb eines Ofens verläuft;
- Figur 2:: eine schematische Querschnittsdarstellung durch eine Transporteinheit mit einer Kluppen- und einer Antriebseinheit, welche mittels einer Rollenlagerung längs einer Führungsschiene verfahrbar ist, und zwar nach dem Stand der Technik;
- Figur 3a:: eine perspektivische Darstellung einer Transporteinheit vor der Bestückung mit Anbauteilen nach dem Stand der Technik;
- Figur 3b:: eine entsprechende Darstellung zu Figur 3a für den Fall einer fertig bestückten Transporteinheit, die aus einem Gussteil besteht;
- Figur 4a:: eine zu Figur 3b vergleichbare Darstellung einer erfindungsgemäßen Transporteinheit in Form eines noch unbearbeiteten Schmiederohlings;
- Figur 4b:: eine entsprechende räumliche Darstellung zu Figur 4a nach einer vorgenommen Bearbeitung des Schmiederohlings;
- Figur 4c:: eine entsprechende Darstellung zu Figur 4b bezüglich einer fertig bestückten Transporteinheit;
- Figur 5a, Figur 5b:: eine räumliche Darstellungen aus unterschiedlichen Blickwinkeln, eines abgewandelten Ausführungsbeispiels nach dem Stand der Technik bezüglich einer Transporteinheit, deren Antriebseinheit aus Kettengliedern besteht und die mittels einer Gleitlagerung ausgestattet ist;
- Figur 6a, Figur 6b:: zwei erfindungsgemäße Darstellungen aus unterschiedlichen Blickwinkeln, jeweils einer Kluppeneinheit, die mit einer Antriebseinheit mechanisch verbindbar ist, wobei die Kluppeneinheit auf Basis eines bearbeiteten und bestückten Schmiederohlings hergestellt ist;

- Figur 7a, Figur 7b:: zwei zu Figur 6a und Figur 6b entsprechende Darstellungen eines Schmiederohlings als Ausgang für die erfindungsgemäße Ketteneinheiten;
- Figur 8a, Figur 8b:: zwei Darstellungen in unterschiedlichen Blickwinkeln entsprechend den vorausgegangenen Figuren 6a bis 7b nach erfolgter Bearbeitung des Schmiederohlings;
- Figur 9a, Figur 9b:: ein abgewandeltes Ausführungsbeispiel einer erfindungsgemäßen Ausgestaltung einer Kluppeneinheit auf Basis einer Rollenlagerung, wobei das Kluppenteil in Figur 9a und 9b in unterschiedlichen Blickwinkeln in fertig bearbeiteter und bestückter Form dargestellt ist;
- Figur 10a, Figur 10b:: jeweils eine Darstellung eines erfindungsgemäßen Schmiederohling als Ausgangspunkt für eine Kluppeneinheit in unbearbeiteten Zustand;

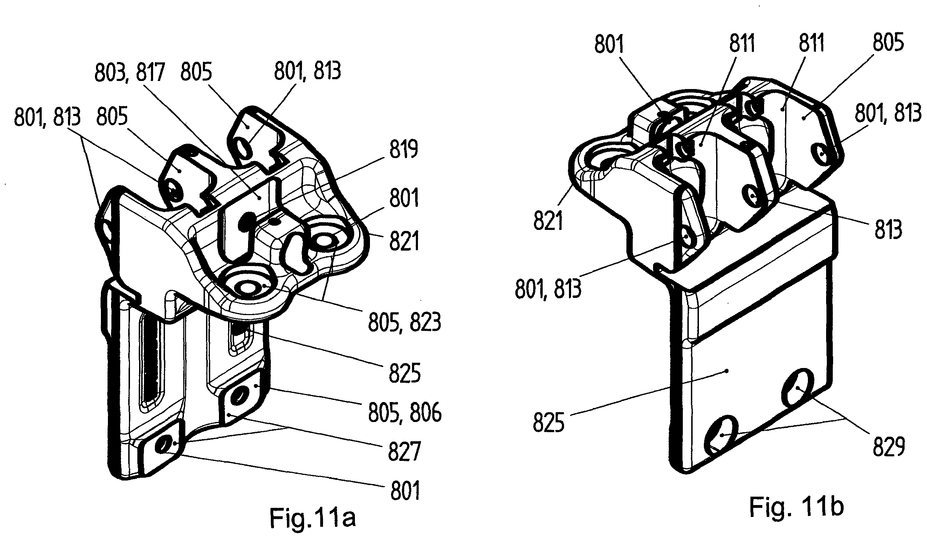

- Figur 11a, Figur 11b:: entsprechende Darstellungen zu Figur 10a und Figur 10b, in welchen den Schmiederohling als bearbeitetes Schmiedeteil vor der Bestückung mit Anbauteilen wiedergegeben ist.

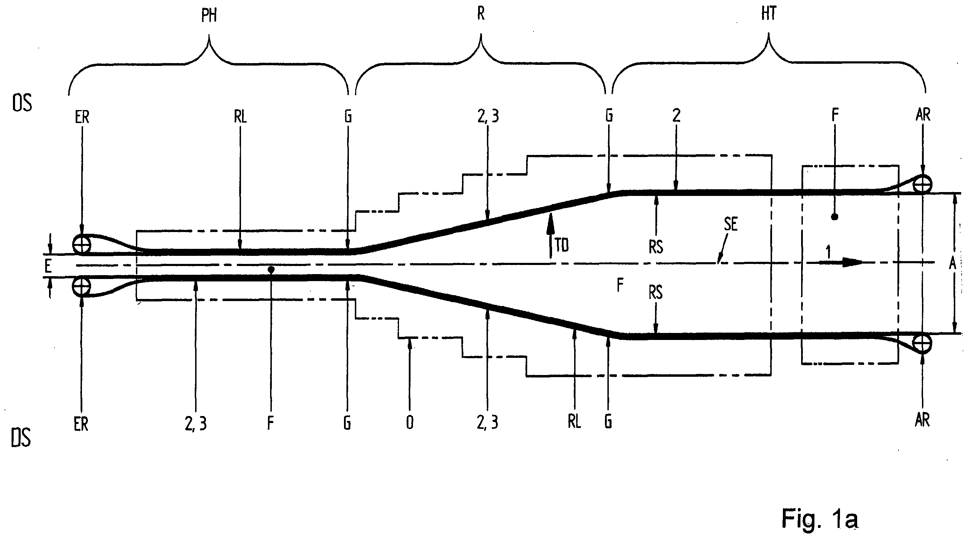

Anhand von Figur 1a ist in schematischer Draufsicht der grundsätzliche Aufbau einer Transportanlage in Form einer Reckanlage gezeigt. Diese Reckanlage umfasst zwei symmetrisch ausgebildete Antriebssysteme, die symmetrisch zu einer mittleren, vertikal zur Zeichen-Ebene verlaufenden Symmetrie-Ebene SE angeordnet sind. Zwischen den beiden auf geschlossenen Bahnen umlaufenden Antriebssystemen wird die zu behandelnde Materialbahn in der Regel in Form eines Kunststofffilms F längs der Abzugsrichtung 1 hindurch bewegt. Die in Figur 1a gezeigte Reckanlage kann beispielsweise eine Simultanreckanlage darstellen, bei der die Materialbahn und insbesondere der Kunststofffolienfilm in der Reckzone R nicht nur in Längsrichtung sondern gleichzeitig in Querrichtung gereckt wird. Ansonsten kann der anhand von Figur 1a gezeigte Aufbau beispielsweise auch eine Folien-Breit- oder Quer-Reckanlage darstellen, die kurz als TD-Reckanlage (TD = Transvers Direction) bezeichnet wird.

Insbesondere im Falle einer Simultanreckanlage kann ein zu reckender Kunststofffolienfilm F (oder eine sonstige Materialbahn) im Einlaufbereich E durch nachfolgend noch erörterte Kluppen erfasst werden, die die Materialbahn an beiden Rändern 8 ergreifen und einklemmen, und zwar auf der so genannten Operator-Seite (OS - operator side) sowie der Antriebsseitigen Drive-Seite (DS - drive side). Die Folie F wird dann in einer nachlaufenden Vorheizzone PH erwärmt und nachfolgend der erwähnten Reckzone R zugeführt. Nach erfolgter Reckung durchläuft der verstreckte Film F verschiedene Wärmebehandlungszone HT, bei denen auch eine Relaxation des Films erfolgen kann. Am Ende der Reckanlage in der so genannten Auslaufzone A wird der Film durch geeignete Mittel ausgekluppt und verlässt dann die Reckanlage.

Längs der erläuterten umlaufenden Bahn kann eine gemeinsame Tragstruktur für das Schienensystem und damit für das Transportsystem vorgesehen sein, so dass das Transportsystem sowohl auf der Reck- oder Prozessseite RS als auch auf der Rücklaufseite RL verwendet werden kann.

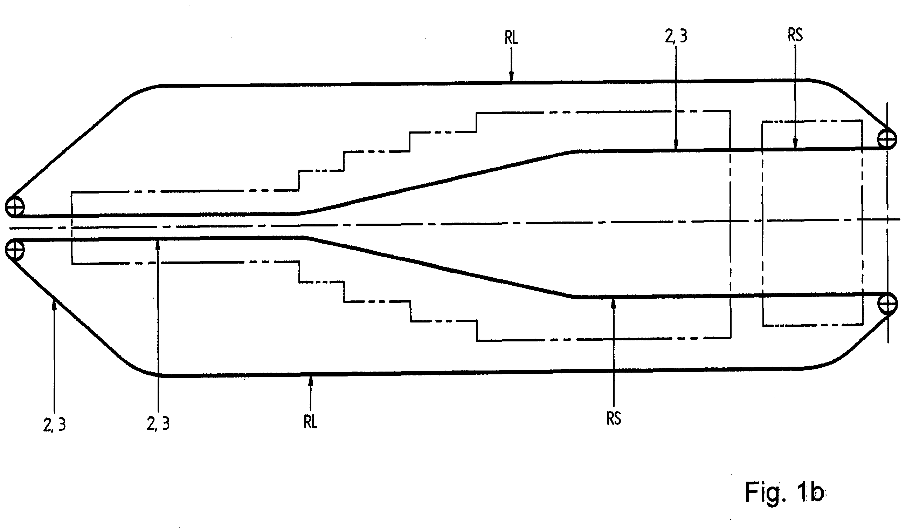

Ansonsten kann auch eine getrennte Trägerstruktur für die Reckseite RS wie die Rücklaufseite RL vorgesehen sein, so dass in diesem Fall nur die reckseitige Trägerstruktur mit der zugehörigen Führungsschiene und/oder einer Gewichtslaufschiene durch den Ofen O verläuft und eine entsprechend ausgebildete weitere Trägerstruktur auf der Rücklaufseite RL außerhalb des Ofens O vorgesehen sein. Ein entsprechender Aufbau ist in schematischer Draufsicht in Figur 1b gezeigt.

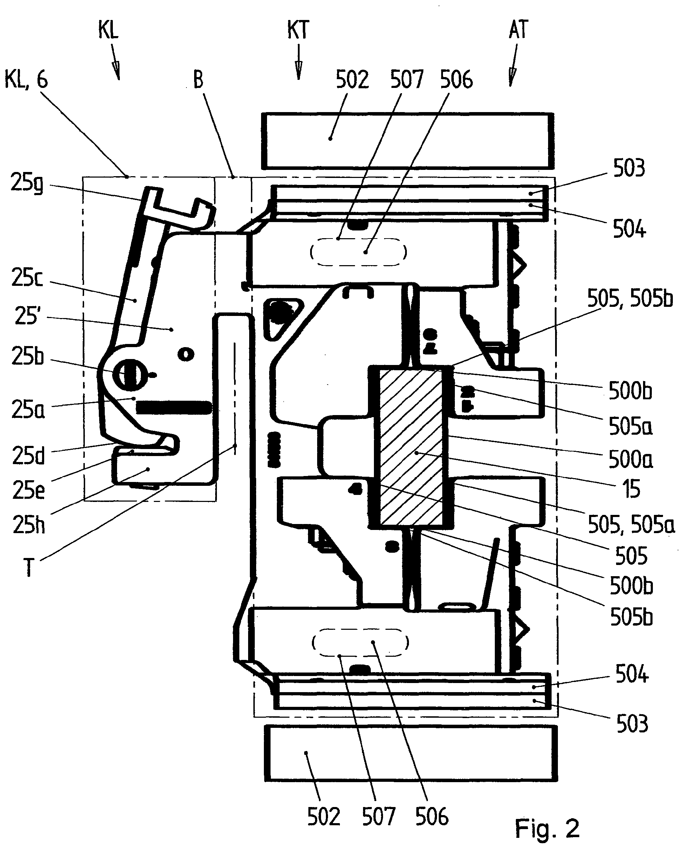

Anhand von Figur 2 ist nunmehr in schematischer Seiten-oder Querschnittsdarstellung (senkrechte Querschnittsdarstellung durch eine Führungsschiene) der Aufbau einer linearmotorgetriebenen Transporteinheit KT dargestellt, wie sie insbesondere für eine Simultanreckanlage eingesetzt werden kann.

Die in Figur 2 im Querschnitt gezeigte Transporteinheit KT gliedert sich in eine Kluppeneinheit KL und in eine Antriebseinheit AT. Dabei ist die Kluppeneinheit KL über eine oben liegende Brücke B mit der Antriebseinheit AT verbunden, wobei die Brücke B auch als Teil der Kluppeneinheit KL und/oder der Antriebseinheit AT verstanden werden kann. Die Kluppeneinheit KL, die letztlich aus dem Kluppenteil 6 besteht oder dieses umfasst, ist von ihrem funktionellen Aufbau her vergleichbar zu herkömmlichen Kluppen. Die Kluppeneinheiten KL umfassen von daher grundsätzlich eine Kluppenhalterung 25a, die zur Aufnahme und zur Fixierung einer Material- oder Folienbahn zwischen einem Kluppenhebel 25c (der sogenannten Messerklappe) und einem Kluppentisch 25e dient. Zwischen dem vorlaufenden freien Ende der Messerklappe 25c und dem Kluppentisch 25e wird also der Rand 8 der Materialbahn oder insbesondere des Kunststofffolienfilms F durch einen selbsthemmenden Mechanismus eingespannt. Dabei wird die jeweilige Messerklappe 25c über eine Achse 25b (die im Wesentlichen parallel zur Führungsschiene verläuft) an dem Kluppenkörper 6, d.h. an der sogenannten Kluppenhalterung 25a verschwenkbar gelagert und kann dabei über einen nicht näher gezeigten Federmechanismus in Öffnungsstellung gehalten werden. Die Messerklappe selbst besteht dabei aus zwei funktionellen Untergruppen, nämlich der Greiffläche 25d (benachbart zum Kluppentisch 25e liegend) und dem Öffnungsteil 25g (auf der gegenüberliegenden Seite der Drehachse 25b), der je nach Öffnersystem (was entweder mechanisch und/oder magnetisch arbeiten kann) in verschiedenen Formen ausgelegt sein kann. Die erwähnte Kluppenhalterung 25a besteht dabei im gezeigten Ausführungsbeispiel aus zwei parallel und in Längsrichtung der Drehachse 25b beabstandeten Haltestegen 25'a, zwischen denen der Achskörper 25'b der dadurch gebildeten Verschwenkachse 25b zum Verschwenken der Messerklappe 25c gehalten ist.

Wie ausgeführt ist diese Kluppeneinheit KL mit dem Kluppenteil 6 über die erwähnte Brücke B mit der Antriebseinheit AT verbunden, die im Fall des erläuterten Ausführungsbeispiels bei einem linearmotorangetriebenen System Sekundärteile KS umfasst, die nachfolgend teilweise auch als Sekundärteile 503 bezeichnet werden. Diese Sekundärteile 503 sind durch Haltekäfige 504 jeweils an der Antriebseinheit AT gehalten, im gezeigten Ausführungsbeispiel einem oben liegend und einem unten liegend an der Antriebseinheit befestigt, also jeweils in Parallellage zu einem oben liegenden oder unten liegenden Linearmotorantrieb, der so genannte Primärteile 502 umfasst. Diese Primärteile 502 bestehen in der Regel aus Spulen, über die elektromagnetische Felder zum Vortrieb der Antriebseinheiten AT erzeugt werden können. Es wird insoweit auf bekannte linearmotorgetriebene Antriebsanlagen im Allgemeinen und auf Reckanlagen im Besonderen verwiesen. Derartige linearmotorgetriebene Simultanreckanlagen sind beispielsweise durch die EP 455 632 oder die DE 44 36 676 bekannt auf deren Offenbarungsgehalt in vollem Umfang Bezug genommen wird.

In diesen Beispielen dient die anhand von Figur 2 im Querschnitt gezeigte Führungsschiene 15 zugleich als Tragschiene (Monorail) der Kluppen-Transporteinheiten KT.

Sowohl die erwähnten Primär- als auch die erwähnten Sekundärteile können an einer oder mehreren Positionen in Bezug auf die Führungsschiene 15 angebracht werden (oben, unten, seitlich). Die Sekundärteile 503 bestehen aus Permanentmagneten, die in dem erwähnten Haltekäfig 504 gehalten werden, der wiederum an der Antriebseinheit AT befestigt wird. Die Lagerung der Kluppeneinheiten KT erfolgt über Rollenlager 505.

In Figur 2 ist die Führungs- und Gewichtsschiene 500 (Monorail) im Querschnitt zu deren Längsrichtung gezeigt. Sie weist einen im gezeigten Ausführungsbeispiel rechteckförmigen Querschnitt auf. An den beiden vertikal ausgerichteten und parallel zueinander versetzt liegenden sowie voneinander weg weisenden Laufflächen 500a laufen jeweils zwei Paar in Horizontalrichtung versetzt zueinander angeordnete Rollen oder Laufräder 505a ab, das eine Paar von Rollen also auf der Kluppen- oder Folienseite und das andere Rollenpaar auf der dazu abweisend liegenden Seite. Diese Rollen drehen jeweils um nicht näher dargestellte Vertikalachsen. Auf der oben liegenden horizontalen Lauffläche 500b und der im Abstand dazu tiefer liegenden parallelen, d.h. horizontalen Lauffläche 500b laufen jeweils zumindest ein weiteres Rollenpaar 505b ab, die um Horizontalachsen drehen. Durch diese Schiene 500 ist also die gesamte fortbewegte Transporteinheit KT mit den Kluppeneinheiten KL und den Antriebseinheiten AT geführt und gewichtsmäßig abgestützt gehalten. Längs einer in Figur 2 gezeigten vertikalen und virtuellen Trennungs-Ebene T ist dabei die Kluppen-Transporteinheit KT in das Kluppenteil 6 (mit einer oben liegenden Brücke B) und das angrenzende Kluppen- oder Transportteil 7 gegliedert. Diese Trenn-Ebene T läuft dabei parallel zu den vertikalen Laufflächen 500a der Führungs- und Tragschiene 500.

Ferner ist in der Querschnittdarstellung gemäß Figur 2 oben und unten liegend an dem Transport- oder Antriebsteil AT noch jeweils eine Dämpfereinrichtung 506 angedeutet, die der Aufnahme von Stößen dient, wenn die entsprechenden Antriebs- oder Transporteinheiten mit den zugehörigen Kluppen auf der Rücklaufseite vor Erreichen der Einlaufzone aufeinander auflaufen.

Die anhand von Figur 2 erläuterte Transporteinheit KT mit dem Kluppenteil 6 und dem Antriebsteil 7 besteht von ihrem Grundaufbau her aus einem Gussteil welches anschließend entsprechend bearbeitet ist und durch Einsetzen der erwähnten Messerklappe 25c und der zugehörigen Drehachse 25b mit dem Achskörper 25'b vervollständigt wird. Ebenso werden in der Regel noch Bohrungen 31 in den Gussköper eingebracht oder nachbearbeitet, um dort beispielsweise die erwähnten Dämpfer 506 einzusetzen. Ebenso müssen noch die gesamten erwähnten Laufrollen mit den zugehörigen Rollenachsen an dem Gusskörper verankert und montiert werden. Bearbeitet wird in der Regel auch noch der Kluppentisch 25e und/oder es wird eine Kluppentischplatte 25'e an der entsprechenden Tischabstützung 25h montiert und eingesetzt.

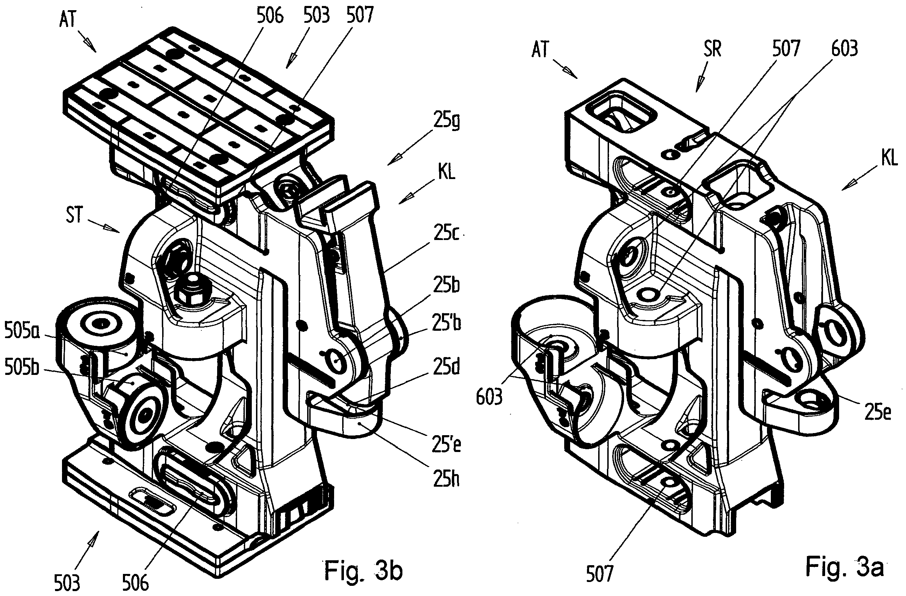

Anhand von Figur 3a ist dabei in schematischer räumlicher Darstellung ein entsprechender herkömmlicher Gusskörper GK gezeigt, der die Antriebseinheit AT und die Kluppeneinheit KL umfasst, und zwar vor der Bestückung mit den vorstehend erläuterten Teilen, wie Messerklappe, Laufrollen, Dämpfer etc.

Anhand von Figur 3b ist in entsprechender Darstellung die gleiche Transporteinheit KT nochmals dargestellt, allerdings nunmehr in komplettierter Form mit der Messerklappe 25c (Kluppenhebel) die mit dem zugehörigen Achskörper 25b an den zwei seitlich beabstandet zueinander verlaufenden Wandabschnitten 25'b verankert ist. Zwischen diesen beiden Wandabschnitten 25'a ist dann der Kluppenhebel, d.h. die Messerklappe 25c verschwenkbar gehalten. Ebenso eingefügt ist ergänzend noch der erwähnte Kluppentischplatte 25'e, die auf dem darunter befindlichen Kluppentischhalter 25h abgestützt gehalten ist. Vor allem sind die gesamten um horizontale und vertikale Achsen drehenden Laufrollen in entsprechenden Aufnahmenräumen 603 eingesetzt. Ebenso sind noch entsprechende Bohrungen für die Verankerung der Drehachsen der Laufrollen vorgesehen, in die die entsprechenden Drehachsen der Laufrollen eingefügt werden, worüber die drehbaren Laufrollen gehalten sind. Ebenso sind in den Gusskörpern noch Ausnehmungen 507 vorgesehen, in die die erwähnten Dämpferelemente 506 eingefügt sind.

Oben und unten liegend ist jeweils dann noch das betreffende Sekundärteil 503 (in der Regel in Form von Permanentmagneten) montiert, die über so genannte Haltekäfige 504 an dem jeweiligen Kluppenkörper befestigt sind.

Im Rahmen der Erfindung wird nunmehr jedoch kein Gusskörper gemäß vorstehend erläuterten Ausführungsbeispielen nach Figur 3a und 3b sondern ein Schmiedekörper als Basisstruktur verwendet.

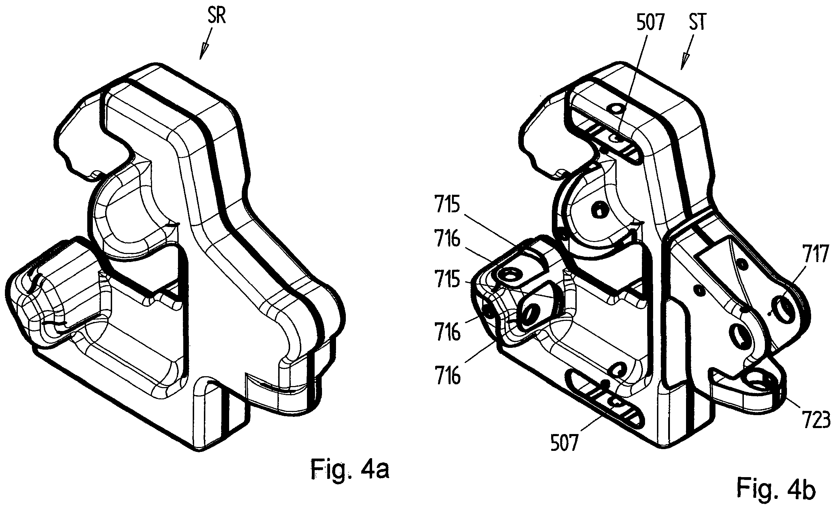

Nachfolgend wird auf die Figuren 4a bis 4c Bezug genommen, in denen ein erstes erfindungsgemäßes Ausführungsbeispiel gezeigt ist.

In Abweichung zum Stand der Technik wird nunmehr die Transporteinheit KT, d.h. sowohl die zur Transporteinheit KT gehörende Kluppeneinheit KL als auch die dazugehörende Antriebseinheit AT in ihrem wesentlichen Bestandteil, d.h. in ihrer Basiskonfiguration aus einem Schmiedeteil ST gebildet. Das hierfür verwendete und in Figur 3a in seiner Ausgangsform gezeigte Schmiedeteil ST kann auch als Schmiederohling SR bezeichnet werden.

Dabei zeigt das Ausführungsbeispiel gemäß Figur 3a ein derartiges Schmiedeteil als Basisstruktur, d.h. den sogenannten Schmiederohling SR für eine Transporteinheit KT, wie sie anhand des vorausgegangenen nach dem Stand der Technik bekannten Ausführungsbeispiels für ein linearmotorangetriebenes Transportsystem, insbesondere eine linearmotorangetriebene Reckanlage verwendet werden kann.

Bei der Herstellung eines derartigen Schmiedeteils ST, d.h. bei der Herstellung eines derartigen Schmiederohlings SR sind dabei die allgemein gültigen Regeln für eine Schmiedegerechte Gestaltung zu beachten. Diese Regeln unterscheiden sich nur eingeschränkt von den Regeln zur Herstellung eines entsprechenden Gussteils.

Beachtet werden muss bei der Herstellung eines derartigen Schmiedeteils ST (Schmiederohling SR), beispielsweise
- dass die Wandstärken schmiedegerecht sind,
- dass keine Materialanhäufungen entstehen,
- dass Dickenänderungen möglichst gering gehalten werden,
- dass Dickenübergänge möglichst gleichmäßig stattfinden usw.

So hat es sich im Rahmen der Erfindung gezeigt, dass beim Schmieden des Schmiederohlings SR Wandstärken erzeugt werden sollten, die ein Mindestmaß von 4 mm nicht unterschreiten. Obgleich also grundsätzlich Mindestmaße von 2 mm und mehr, insbesondere von 3 mm und mehr in Einzelfällen auch ausreichend sind, sind Wandstärken bevorzugt, die ≥ 3,5 mm, 4 mm, 4,5 mm, 5 mm, 5,5 mm, oder 6 mm sind.

Als Schmiedeverfahren selbst kommen alle bekannten Verfahren in Betracht.

Dabei kann nach Wikipedia Schmieden als das spanlose Druckumformen von Metallen zwischen zwei Werkzeugen Durch Querschnittsveränderungen bezeichnet werden. Die Umformung erfolgt dabei in der Regel unter sehr hohem Druck bei Normaltemperatur oder bei einer gegenüber der Normaltemperatur höherliegenden Verarbeitungstemperatur (Warmumformung). Bekannt ist sogar das Kaltumformen, welches unterhalb der Normaltemperatur bei einer so genannten Rekristallisationstemperatur stattfindet.

Allgemein ist das sogenannte
- Warmumformen
- das Kaltumformen oder das
- Thixoschmieden
bekannt.

Da insoweit keine Einschränkungen bestehen, wird hiermit auf alle vorbekannte Schmiedeverfahren verwiesen, die im Rahmen der Erfindung angewandt werden können.

Aus der Darstellung des Schmiederohlings gemäß Figur 3a ergibt sich auch, dass dieser Schmiederohling hinterschneidungsfrei gebildet ist.

Aus diesem Schmiederohling kann dann durch Nachbearbeitung jene Transporteinheit vom Grundaufbau geschaffen werden, wie sie anhand von Figur 3b in vereinfachter schematischer Darstellung wiedergegeben ist. Dieser gemäß Figur 3b bearbeitete Schmiederohling zeichnet sich dadurch aus, dass ausgehend von dem anhand von Figur 3a gezeigten Schmiederohling alle Funktionalen Strukturen entsprechend bearbeitet sind, wie etwa
- Anschraubflächen 715 und Bohrungen 716 für die Rollenlager 505 einschließlich einem Rollenlager-Schutzgehäuse 717, den sogenannten Haltekäfig (welche also die Rollen teilweise an den zu den Laufflächen abweisenden Umfangsflächen umgibt),
- den Führungstaschen 507 für die erwähnten Dämpfer 506,
- die entsprechenden Bohrungen 717 für die Aufnahme des Drehachskörpers 25'b für die Messerklappen 25c, sowie
- die entsprechende Verankerungseinrichtungen 723 für die Verankerung der Kluppentischplatte 25'e.

Aus dem unmittelbaren Vergleich zwischen Figur 4a und 4b ist also zu ersehen, dass die entsprechenden Bohrungen oder die entsprechenden Messerklappen-Ausnehmungen 125 durch Nachbearbeitung des Schmiedekörpers hergestellt wurde, oder werden kann, sofern eine Nachbearbeitung notwendig ist.

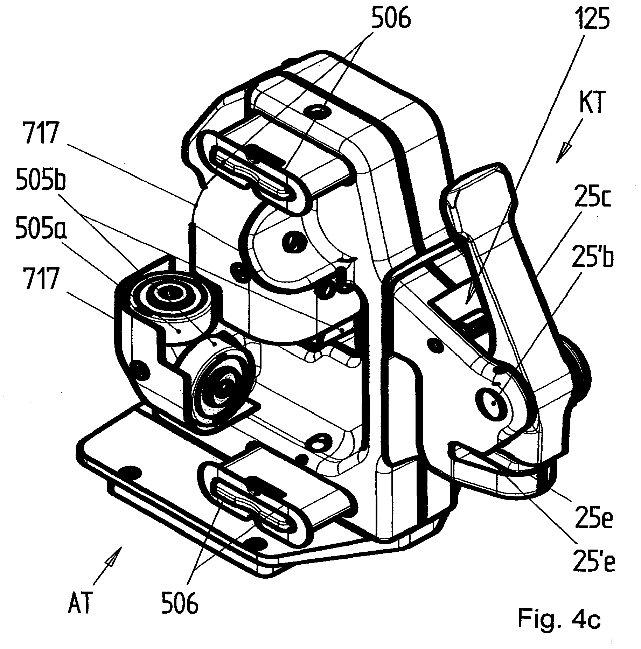

Anhand von Figur 4c ist dann der auf Basis eines Schmiedeteils ST gebildete Kluppenteil KT dargestellt, in welchem die vorstehend erläuterten Anbauteile wie Messerklappe, Dämpfer, Laufrollen und Laufrollenhalterung oder Laufrollengehäuse eingesetzt sind.

Im gezeigten Ausführungsbeispiel besteht also die Kluppeneinheit KT insgesamt aus einem Schmiedeteil oder Schmiedekörper ST, mit Ausnahme der daran vorgenommenen Bearbeitungsmaßnahmen und vor allem der im Rahmen der Bearbeitungsmaßnahmen eingesetzten Zusatz- und Anbauteile, wie vorstehend erläutert.

Eine entsprechende Kluppeneinheit KT im fertig hergestellten Zustand wie in Figur 4c dargestellt ist kann von daher im Rahmen der Erfindung auch so umschrieben werden, dass eine derartige vollständige Kluppen-Transporteinheit KT einen Volumen- oder Gewichtsanteil von mindestens 60%, insbesondere zumindest 65%, 70%, 75%, 80%, 85%, 90% oder von zumindest 95% aufweist, der durch ein Schmiedeteil gebildet ist. Insbesondere die Anbauteile können aus Stahl, aus Guss oder aus sonstigen Materialien bestehen.

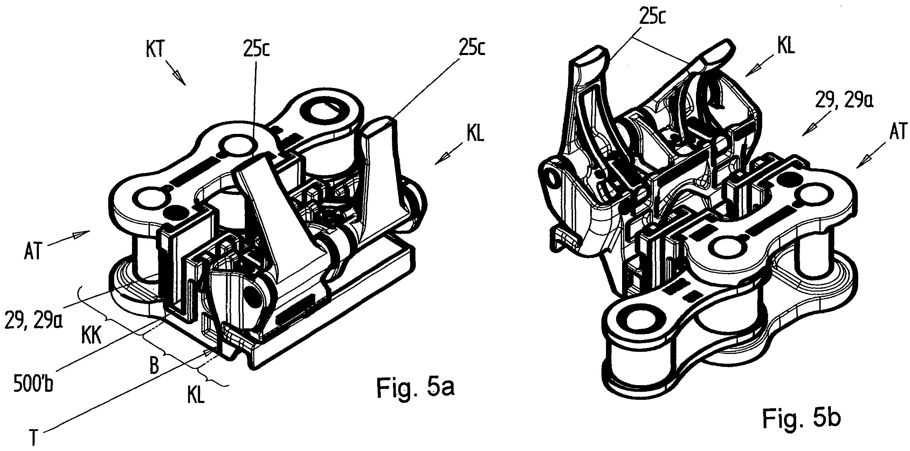

Anhand von Figur 5a und 5b wird einmal von der Oberansicht und einmal von der Unteransicht, insbesondere vom Kluppenteil her ein abgewandeltes Ausführungsbeispiel nach dem Stand der Technik gezeigt.

Anhand von Figur 5a und 5b ist dabei eine Transporteinheit KT gezeigt, wie sie beispielsweise für eine Querreckanlage verwendet werden kann. Von daher umfasst die Transporteinheit KT wie in dem vorausgegangenen Ausführungsbeispiel ebenfalls eine Kluppeneinheit KL, die über eine Brücke B mit der Antriebseinheit AT verbunden ist. Die Antriebseinheit AT besteht in diesem Ausführungsbeispiel jedoch nicht aus einer linearmotorgetriebenen Einheit sondern aus Ketteneinheiten KK die um Kettenbolzen wie hinlänglich bekannt gelenkig miteinander verbunden sind.

Als weiterer Unterschied kommt bei diesem Ausführungsbeispiel zum Tragen, dass keine Rollenlagerung sondern eine Gleitlagerung 29 vorgesehen ist. Mit anderen Worten wird die so gestaltete Transporteinheit KT über einen im Querschnitt U-förmigen Gleitschuh 29a längs einer Führungsschiene 500 längs bewegt, wobei der Gleitschuh 29a mit seinen gegenüberliegenden Gleitflächen an den vertikalen Lauf- oder Gleitflächen 500a der Führungsschiene 500 anliegt und die oben liegende horizontale Gleitfläche 500'b auf der oben aufliegenden im gezeigten Ausführungsbeispiel horizontal verlaufenden Oberseite 500b der Führungsschiene 500 aufliegt und das Gewicht der Transporteinheit aufnimmt. Auch bei diesem Ausführungsbeispiel sind entsprechende Kluppenhebel 25c vorgesehen, die um eine Vertikalachse 25b unter Ausbildung eines Achskörpers 25'b verschwenkbar sind. Der Kluppenhebel oder das Kluppenmesser 25c weist dabei wieder einen untenliegenden Klemmabschnitt 25d auf, worüber der Rand einer Materialbahn oder Kunststofffolienbahn F gegenüber einem Kluppentisch 25e gehalten werden kann. Zur Vermeidung von Wiederholungen wird von daher auf das vorhergehende Ausführungsbeispiel für den Fall eines Linearmotorantriebes oder für andere vorbekannte vergleichbare Ausführungsbeispiele verwiesen.

Auch bei diesem Ausführungsbeispiel kann nunmehr der Körper der Transporteinheit KT oder zumindest der Antriebseinheit AT in diesem Ausführungsbeispiel in Form einer Ketteneinheit KK aus einem Schmiederohling SR gebildet werden, so dass auch in diesem Ausführungsbeispiel wiederum zumindest ein Teil der Transporteinheit KT in seiner Basis aus einem Schmiedeteil ST gebildet ist.

Insoweit wird auf das nachfolgende Ausführungsbeispiel Bezug genommen.

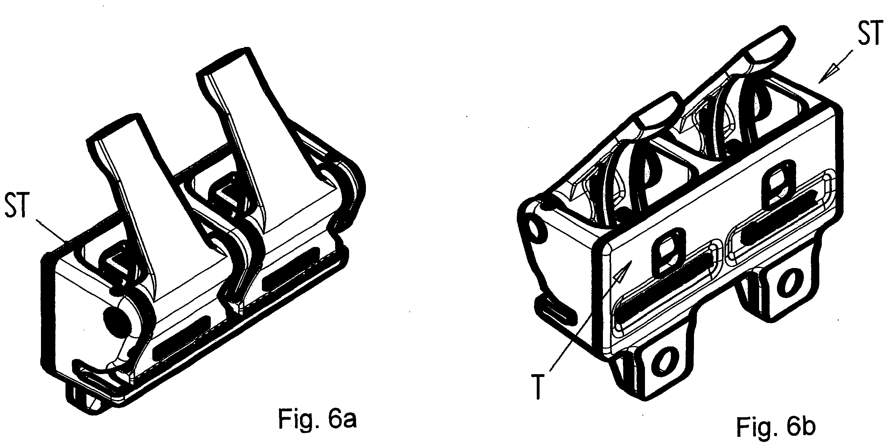

Dabei ist in Figur 6a und 6b eine erfindungsgemäße Ausführungsform einer fertig bestückten Kluppeneinheit KL gezeigt, die in Schmiedetechnik oder im Wesentlichen in Schmiedetechnik hergestellt ist und die dann mit einer entsprechenden Antriebseinheit AT hier in Form einer Ketteneinheit KK verbunden wird, die beispielsweise wie im Stand der Technik auch aus üblichen Ketteneinheiten hergestellt ist oder diese umfasst.

Um nunmehr eine oder mehrere Einheiten des Transportteils hinterschneidungsfrei in Schmiedetechnik herstellen zu können, wird eine Trennstelle T vorgesehen.

Längs dieser Trennstelle T lässt sich nunmehr die Transporteinheiten in einer auf herkömmliche Weise oder eher herkömmliche Weise hergestellte Ketteneinheit KK und eine überwiegend in Schmiedetechnik hergestellte Ketteneinheit KK trennen, die hinterschneidungsfrei hergestellt ist.

Die auf einem Schmiederohling basierende Kluppeneinheit KL ist dabei in Figur 6a von der Oberseite der Messerklappen und in Figur 6b von der rückwertigen Seite jeweils in perspektivischer Darstellung wiedergegeben, und zwar in der bestückten Endversion.

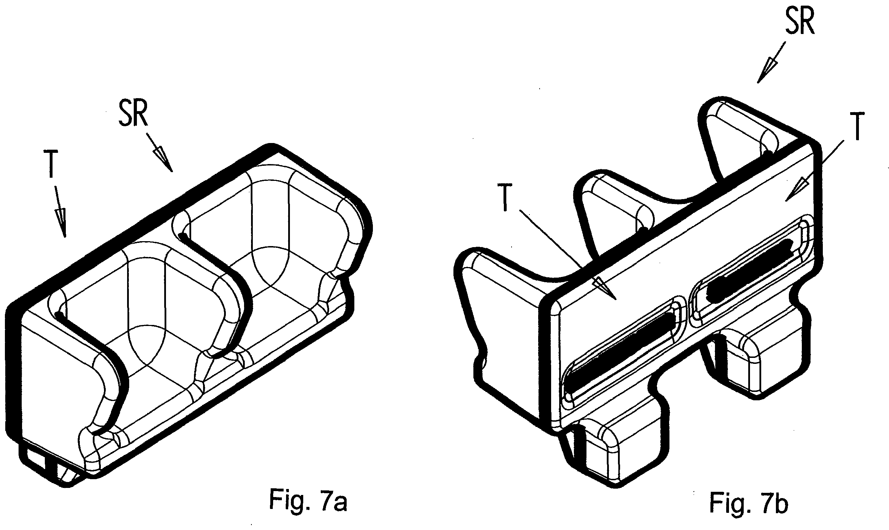

Anhand von Figur 7a und Figur 7b ist dabei vergleichbar der Darstellung nach Figur 6a der Schmiederohling SR von seiner Messerklappenseite aus und in Figur 7b von der entsprechenden Rückseite aus wiedergegeben. Bezüglich der Herstellung dieses Schmiedeteils ST in Form eines Schmiederohlings SR gelten auch die vorstehend gemachten Ausführungen bezüglich der Wandstärke, der hinterschneidungsfreien Herstellung der Teile etc..

Dieser Schmiederohling SR wird anschließend wiederum entsprechend bearbeitet, d.h. es werden entsprechende Bohrungen 801 oder allgemein Ausnehmungen 803 in das Schmiedematerial eingearbeitet. Ebenso werden Bereiche 805 des Schmiedematerials entfernt, d.h. insbesondere geglättet, beispielsweise durch Frästechnik etc..

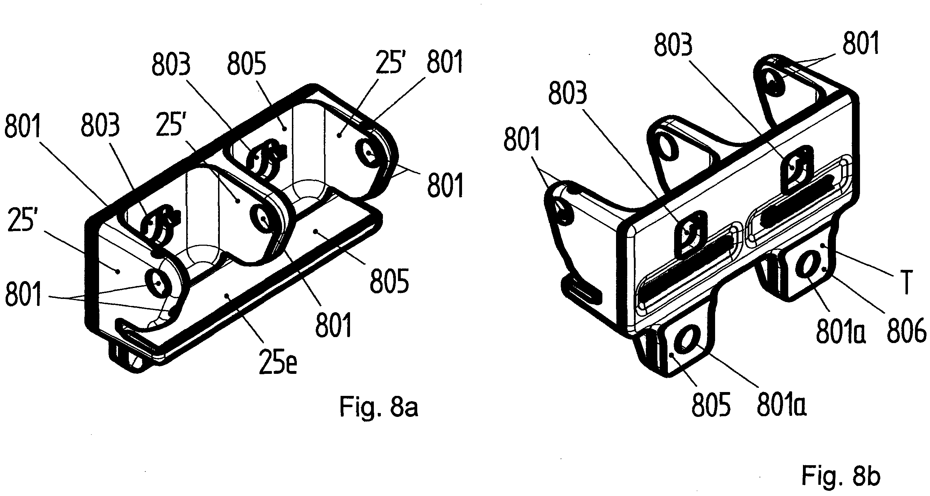

In Figur 8a und 8b ist zu ersehen, dass der gesamte Aufnahmeraum zur Aufnahme der Messerklappen einschließlich des Kluppentisches 25e, der rückwertigen Seite sowie den nach innen weisenden Flächen der Seiten- oder Haltewangen 25' der Halteeinrichtung für die Messerklappen 25c oberflächenmäßig abgearbeitet, also bearbeitet ist. Hier ist überall Material des Schmiederohlings SR unter Verjüngung der Materialstärke abgearbeitet worden, um glatte Flächen oder geeignete Flächen, auch Anbauflächen für die weiteren hier einzubauenden Teile und Bestandteile vorbereitet zu haben. Das gleiche gilt für die in Figur 8b auf der Rückseite ersichtlichen Anbauflächen 806, an denen unter Ausbildung der Trennstelle T dann die Antriebseinheit AT planparallel anliegend angebaut werden kann.

Dadurch erhält man ausgehend von dem Schmiederohling SR gemäß den Figuren 7a und 7b ein bearbeitetes Schmiedeteil ST, wie es in entsprechenden Blickwinkel in Figur 8a und 8b wiedergegeben ist.

Dieses bearbeitete Schmiedeteil ST wird dann wiederum bestückt, nämlich mit den Messerklappen 35e und den die Messerklappen 25e haltenden Messerklappen-Achsen 25'e.

Über Schraubverbindungen, die in den unten liegenden Bohrungen 801a eingeführt werden können, kann die so auf Basis eines Schmiedeteils ST hergestellte Kluppeneinheit KL dann mit der zugehörigen Antriebseinheit AT hier in Form einer Ketteneinheit KK fest verbunden werden.

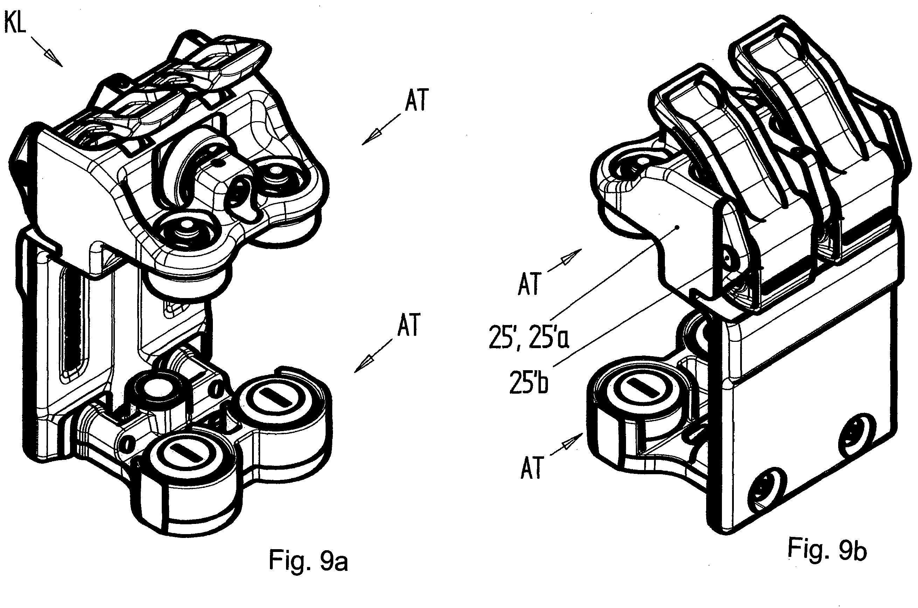

Anhand von Figur 9a und 9b ist wiederum eine Ausführungsform nach dem Stand der Technik für eine dem vorausgegangenen Ausführungsbeispiel ähnliche Transporteinheit KT gezeigt. Das Ausführungsbeispiel nach Figur 9a und 9b unterscheidet sich von dem nach dem Stand der Technik bekannten Ausführungsbeispiel nach Figur 5a und 5b dadurch, dass die Transporteinheit KT an der Führungsschiene 500 nicht durch eine Gleitlagerung sondern durch eine Rollenlagerung gehalten ist, vergleichbar jener Rollenlagerung, wie sie bereits anhand des an erster Stelle genannten Ausführungsbeispiels nach den Figuren 4a bis 4c beschrieben ist.

Anhand von Figur 9a und 9b ist dabei jeweils ein erfindungsgemäße fertig aufgebaute und bearbeitete Kluppeneinheit KL gezeigt, die wiederum auf Basis eines Schmiedeteils ST ausgebildet ist und zwar durch entsprechende Bearbeitung eines Schmiederohlings SR. Da auch hier ähnlich wie bei den vorausgegangenen Ausführungsbeispielen nicht die Antriebseinheit AT selbst sondern lediglich die mit der Antriebseinheit AT verbundene Kluppeneinheit KL auf Basis eines Schmiederohlings oder Schmiedeteils (Schmiedekörpers) hergestellt ist, ist zur besseren Darstellbarkeit auch in den Figuren 9a und 9b die nach dem Stand der Technik bekannte Antriebseinheit AT nicht näher dargestellt.

Die anhand von Figur 9a und 9b wiedergegebenen bearbeiteten und fertig aufgebauten Kluppeneinheiten KL sind dabei einmal von ihrer Rollenführungsseite und zum anderen von der rückwertigen, d.h. der Messerklappenseite her wiedergegeben. Diese Teile werden zur Komplettierung dann beispielsweise mit entsprechenden Antriebseinheiten AT beispielsweise durch Schraubtechnik (also durch Verschrauben) fest miteinander verbunden, wobei die Antriebseinheiten Dann beispielsweise aus Kettenteilen ähnlich den vorausgegangenen Ausführungsbeispielen oder aus Hebelteilen bestehen oder diese umfassen, wenn es sich um ein Pentagraphsystem handelt, wie es nicht in einer Querreckanlage sondern in einer Simultanreckanlage zum Tragen kommt. Insoweit ist auch die Führungsschiene (bzw. die im Falle eines Pentagraphsystems zusätzlich vorgesehene Steuerschiene) zur besseren Darstellbarkeit in Figur 9a und 9b nicht wiedergegeben.

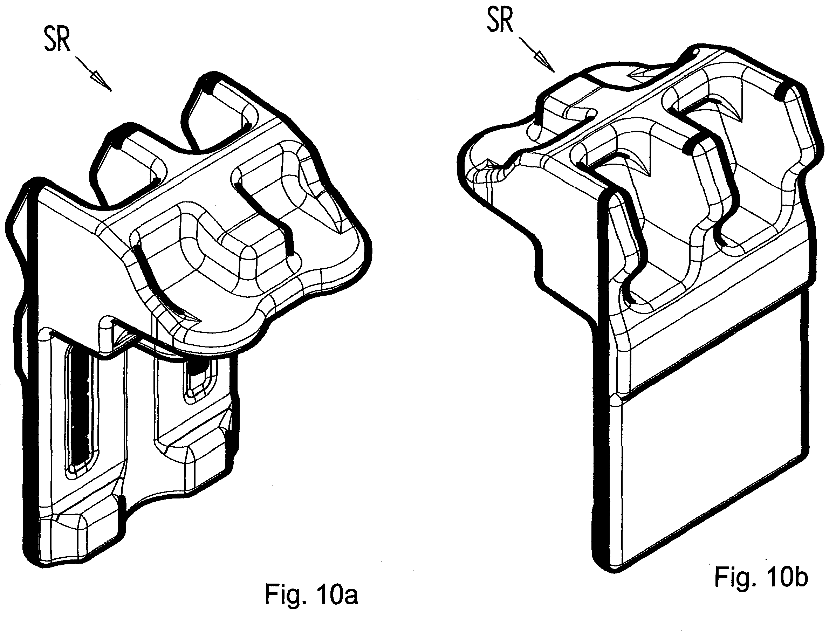

Anhand von Figur 10a und 10b sind dabei wiederum entsprechende Darstellungen des Schmiederohlings SR für das erläuterte Ausführungsbeispiel wiedergegeben. Der Schmiederohling umfasst dabei die vollständige Struktur des Körpers mit Erhebungen, diversen Wandelementen, Stegen, Ausnehmungen etc., die in entsprechender bevorzugter Wandstärke wie oben ausgeführt hergestellt sind, unter Ausbildung entsprechender Vertiefungen oder Taschen etc. Letztendlich handelt es sich aber auch hier wiederum um eine hinterschneidungsfreie Ausgestaltung des Schmiederohlings SR.

Anschließend wird dieser Schmiederohling SR wie erläutert wieder bearbeitet, indem eine Reihe von Bohrungen 801 eingebracht werden, Ausnehmungen 803, Materialabhebende Flächenbearbeitungen 805 etc..

So sind beispielsweise bei dem Ausführungsbeispiel nach Figur 10a und 10b die vertikalen Haltestege 25'a entsprechend planparallel abgearbeitet, so dass dort jeweils in den nebeneinander sitzenden Ausnehmungen 811 die erwähnten Messerklappen 25c mit ihren zugehörigen Verschwenkachskörpern 25'b eingebaut werden können, wozu die Messerklappen-Achsbohrungen 813 in den Haltestegen oder Haltestegwänden 25'a eingebracht sind.

Auf der gegenüberliegenden Seite des Mittellängssteges 805 ist ebenfalls wiederum eine Laufrollen-Tasche 817 materialmäßig ausgearbeitet und darüber hinaus eine quer dazu verlaufende Laufrollenachsbohrung 819 eingebracht, so dass hier eine erwähnte um eine Horizontalachse drehende Laufrolle eingebaut werden kann, die auf der oben liegenden horizontalen Lauffläche 500b der Führungsschiene 500 im eingebauten Zustand abrollt.

Entsprechend sind an horizontalen Wandabschnitten 821 entsprechende Laufrollen-Verankerungsabschnitte in Form einer Vertiefung 823 ausgearbeitet, so dass dann auf der Unterseite diese horizontalen Wandabschnitte 821 die um vertikale Achsen drehenden Laufrollen eingebaut und verankert werden können (Figur 9a, 9b).

Unten liegend an der vertikalen Zentralwand 825 kann dann eine untere Rollenlager-Halterung 827 an entsprechend vorher in dem zentralen Wandabschnitt 825 eingebrachten Bohrungen 829 mittels Schraubtechnik befestigt werden. Diese Halterung selbst müssen ebenso wie andere Anbau- und/oder Einbauteile nicht als Schmiedeteile ausgebildet sein.

Zusammenfassend kann also festgehalten werden, dass entweder einer Transporteinheit KT mit ihrer Kluppeneinheit KL und der zugehörigen Antriebseinheit AT (sowie ein gegebenenfalls vorgesehenen Brückenteil B) auf Basis eines Schmiederohlings SR hergestellt sein kann. Möglich ist aber genauso, dass eine derartige Transporteinheit KT zumindest längs einer Trennebene geteilt ist, so dass nur ein Teil dieser Transporteinheit KT, insbesondere die so genannte Kluppeneinheit KL auf Basis eines Schmiederohlings SR hergestellt ist.

Dieser Schmiederohling SR ist in geeigneter Weise dann nachbearbeitet, um entsprechende Ausnehmungen, Vertiefungen, Taschen, Bohrungen einzuarbeiten oder planparallele Flächen durch Materialabarbeitung herzustellen, an denen dann auch gewissen Anbauteile angebaut oder in entsprechenden Ausnehmungen untergebracht werden können, wie sie für eine herkömmliche Kluppeneinheit KL benötigt werden. Die entsprechenden bewegten Teile wie Messerhebel oder Rollen etc. können hier ebenfalls untergebracht und montiert werden.

Auch weitere der Roll- und/oder Gleitlagerung dienende Teile können als Anbauteile an einem derartigen Schmiederohling an einer Trennstelle (Schnittstelle) angebaut und montiert werden.

Das Antriebsteil selbst kann unterschiedlichst ausgebildet sein. Es kann vorgesehen sein für einen Linearmotorantrieb, für einen Kettenantrieb mit Hebelteilen für eine Steuerschiene im Falle eines Pentagraphsystems. Es sind auch gemischte Systeme möglich, die teilweise eine Rollenlagerung und teilweise eine Gleitlagerung umfassen.

Dabei kann die fertig hergestellte Transporteinheit KT oder zumindest die im Rahmen der fertig hergestellten Transporteinheit KT vorgesehene Kluppeneinheit KL von ihrer Basis her oder ihrer überwiegenden Struktur her aus dem erwähnten Schmiedeteil oder Schmiederohling geformt sein.

Allgemein gesprochen kann die gesamte Transporteinheit KT oder zumindest die Kluppeneinheit KL oder zumindest die Antriebseinheit AT aus einem Schmiederohling geformt sein, derart, dass die Transporteinheit KT insgesamt oder zumindest die Kluppeneinheit KL und/oder zumindest die Antriebseinheit AT einen Volumen- und/oder Gewichtsanteil aufweist, der zumindest 60%, insbesondere zumindest 65%, 70%, 75%, 80%, 85% oder zumindest 90% oder insbesondere zumindest 95 % des Volumens und/oder des Gewichts der gesamten fertigen Transporteinheit KT oder zumindest der zugehörigen fertigen Kluppeneinheit KL oder zumindest der zugehörigen Antriebseinheit AT aufweist.

## Patentansprüche

1. Transporteinheit für eine Transporteinrichtung, insbesondere für eine Quer-, Längs- und/oder Simultan-Reckanlage, bei welcher Transporteinheiten (KT) mit einer Kluppeneinheit (KL) und einer damit verbundenen Antriebseinheit (AT) längs einer Führungs- und/oder Tragschiene (500) verfahrbar sind,
**gekennzeichnet durch** die folgenden weiteren Merkmale:
- die Kluppen-Transporteinheit (KT) oder die Kluppeneinheit (KL) und/oder die Antriebseinheit (AT) weist einen Volumen- oder Gewichtsanteil von zumindest 60% auf, der aus einem Schmiedeteil (ST) besteht und/ oder aus einem Schmiederohling (SR) gebildet ist.

2. Transporteinheit nach Anspruch 1, **dadurch gekennzeichnet, dass** die Transporteinheit (KT) oder die Kluppeneinheit (KL) und/oder die Antriebseinheit (AT) volumen- oder gewichtsmäßig zu mehr als 65%, insbesondere zu mehr als 70%, 75%, 80%, 85%, 90% und insbesondere mehr als 95% aus einem Schmiedeteil (ST) besteht und/oder aus einem Schmiederohling (SR) gebildet ist.

3. Transporteinheit nach Anspruch 1 oder 2, **dadurch gekennzeichnet, dass** das Schmiedeteil (ST) aus einem bearbeiteten Schmiederohling (SR) besteht, in welchem Bohrungen (801), Ausnehmungen (803), materialabhebende Flächenbearbeitungen (805) ausgebildet oder eingebracht sind.

4. Transporteinheit nach Anspruch 3, **dadurch gekennzeichnet, dass** in den Bohrungen (801), den Ausnehmungen (803) und den materialabhebenden Flächenbearbeitungen (805) an dem Schmiedeteil (ST) Anbauteile montiert sind, insbesondere zumindest eine verschwenkbare Messerklappe (25e) mit zugehörigem Achskörper (25'e) und eine Gleitlagerung (29, 29a) und/oder Rollenlagerung einschließlich zugehörigen Laufrollen (505a, 505b).

5. Transporteinheit nach Anspruch 3 oder 4, **dadurch gekennzeichnet, dass** an dem Schmiedeteil (ST) eine Gleit-oder Rollenlagerhalterung (827) an einer Schnittstelle angeschraubt ist.

6. Transporteinheit nach einem der Ansprüche 1 bis 5, **dadurch gekennzeichnet, dass** die Transporteinheit (KT) eine Trennebene oder Schnittstelle (T) zwischen der Kluppeneinheit (KL) und der Antriebseinheit (AT) aufweist, dass die Kluppeneinheit (KL) und die Antriebseinheit (AT) mechanisch miteinander verbunden sind, vorzugsweise mittels einer Schraubverbindung, und dass zumindest die Kluppeneinheit (KL) ein bearbeitetes Schmiedeteil(ST) umfasst.

## Claims

1. Transport unit for a transport device, in particular for a transverse, longitudinal and/or simultaneous stretching installation, in which transport units (KT) comprising a gripper unit (KL) and a drive unit (AT) connected thereto are displaceable along a guide rail and/or support rail (500),
**characterised by** the following further features:
- the gripper transport unit (KT) or the gripper unit (KL) and/or the drive unit (AT) has a proportion by weight or by volume of at least 60 % which consists of a forged part (ST) and/or is formed from a forging blank (SR).

2. Transport unit according to claim 1, **characterised in that** more than 65 %, in particular more than 70 %, 75 %, 80 %, 85 % or 90 % and in particular more than 95 %, of the volume or weight of the transport unit (KT) or the gripper unit (KL) and/or the drive unit (AT) consists of a forged part (ST) and/or is formed from a forging blank (SR).

3. Transport unit according to either claim 1 or claim 2, **characterised in that** the forged part (ST) consists of a processed forging blank (SR) in which holes (801), recesses (803) or material-removing surface machinings (805) are formed or made.

4. Transport unit according to claim 3, **characterised in that** installation parts, in particular at least one pivotable blade flap (25e) having an associated axle body (25'e) and a slide bearing (29, 29a) and/or roller bearing including associated running rollers (505a, 505b), are mounted in the holes (801), the recesses (803) and the material-removing surface machinings (805) in the forged part (ST).

5. Transport unit according to either claim 3 or claim 4, **characterised in that** a slide or roller bearing mounting (827) is screwed onto the forged part (ST) at an interface.

6. Transport unit according to any of claims 1 to 5, **characterised in that** the transport unit (KT) comprises a separating plane or interface (T) between the gripper unit (KL) and the drive unit (AT), **in that** the gripper unit (KL) and the drive unit (AT) are mechanically interconnected, preferably by means of a screw connection, and **in that** at least the gripper unit (KL) comprises a processed forged part (ST).

## Revendications

1. Unité de transport pour un dispositif de transport, en particulier une installation d'étirage transversal, longitudinal et/ou simultané, dans laquelle des unités de transport (KT) comprenant une unité de pinces (KL) et une unité d'entraînement (AT) reliée à celle-ci sont déplaçables le long d'un rail de guidage et/ou de transport (500),
**caractérisée par** les autres caractéristiques suivantes :
- l'unité de transport à pinces (KT) ou l'unité de pinces (KL) et/ou l'unité d'entraînement (AT) présente une part volumique ou pondérale d'au moins 60 % qui est constituée d'une pièce forgée (ST) et/ou d'une ébauche à forger (SR).

2. Unité de transport selon la revendication 1, **caractérisée en ce que** l'unité de transport (KT) ou l'unité de pinces (KL) et/ou l'unité d'entraînement (AT) est constituée en part volumique ou pondérale à plus de 65 %, en particulier à plus de 70 %, 75 %, 80 %, 85 %, 90 % et en particulier à plus de 95 % d'une pièce forgée (ST) et/ou d'une ébauche à forger (SR).

3. Unité de transport selon la revendication 1 ou 2, **caractérisée en ce que** la pièce forgée (ST) est constituée d'une ébauche à forger (SR) oeuvrée dans laquelle sont réalisés ou ménagés des perçages (801), des évidements (803), des usinages de surface par enlèvement de matière (805).

4. Unité de transport selon la revendication 3, **caractérisé en ce que** dans les perçages (801), les évidements (803) et des usinages de surface par enlèvement de matière (805), des pièces rapportées sont montées sur la pièce forgée (ST), en particulier au moins un volet-couteau pivotant (25e) avec un corps d'axe associé (25'e) et un palier coulissant (29, 29a) et/ou un palier à roulement, y compris les rouleaux associés (505a, 505b).

5. Unité de transport selon la revendication 3 ou 4, **caractérisé en ce qu'**une monture de palier coulissant ou de palier à roulement (827) est visée à une interface sur la pièce forgée (ST).

6. Unité de transport selon l'une des revendications 1 à 5, **caractérisé en ce que** l'unité de transport (KT) présente un plan de séparation ou une interface (T) entre l'unité de pinces (KL) et l'unité d'entraînement (AT), **en ce que** l'unité de pinces (KL) et l'unité d'entraînement (AT) sont reliées mécaniquement l'une à l'autre, de préférence par une liaison vissée, et **en ce qu'**au moins une unité de pinces (KL) comprend une pièce forgée oeuvrée (ST).
